# EUROPÄISCHE PATENTSCHRIFT

(11) **EP 0 583 558 B1**
(45) Veröffentlichungstag und Bekanntmachung des Hinweises auf die Patenterteilung: **24.07.1996**
(21) Anmeldenummer: 93108136.8
(22) Anmeldetag: 19.05.1993
(51) Int. Cl.: B01D 46/24, B01D 46/44

(54) **Vorrichtung zur Überwachung von Filterelementen**
Filter elements monitoring device
Dispositif pour surveiller des éléments de filtrage

(30) Priorität: 07.08.1992 DE 4226144
(43) Veröffentlichungstag der Anmeldung: 23.02.1994
(73) Patentinhaber: DEUTSCHE BABCOCK ENERGIE- UND UMWELTTECHNIK AKTIENGESELLSCHAFT, D-46049 Oberhausen (DE)
(72) Erfinder: Rehwinkel, Heiko, Dr., W-4250 Bottrop-Kirchhellen (DE); Jelich, Werner, W-4630 Bochum 1 (DE); Klauke, Friedrich, dr., W-4030 Ratingen 1 (DE); König, Dieter, Dr., W-4324 Hattingen (DE); Kalthoff, Udo, Dr., W-4330 Mülheim/Ruhr (DE)
(74) Vertreter: Müller, Jürgen, Dipl.-Ing.

(56) Entgegenhaltungen:
- EP-A- 0 314 253
- WO-A-87/07179
- WO-A-88/07404
- US-A- 4 500 326
- PATENT ABSTRACTS OF JAPAN, Band 7, Nr. 191 (C-182)(1336), 20. August 1983; & JP -A-58092440 (AMANO K.K) 01.06.1983
- PATENT ABSTRACTS OF JAPAN, Band 10, Nr. 90 (C-337)(2147), 8. April 1986; & JP - A - 60222123 (HITACHI PLANT KENSETSU K.K.) 06.11.1985

## Beschreibung

Die Erfindung betrifft eine Vorrichtung zur Überwachung von hohlen, zum Filtern von heißen staubbeladenen Gasen dienenden Filterelementen mit den Merkmalen des Oberbegriffes des Patentanspruches 1.

Aus der DE-A-3 938 264 und der EP-A-0 433 637 ist es bekannt, die Filterkerzen innerhalb des Filtergehäuses gruppen- oder reihenweise einzelnen das Reingas führenden Sammelkanälen zuzuordnen. Diese Sammelkanäle, auf denen die keramischen Filterkerzen ruhen oder unter denen die Filterkerzen angeordnet sind, sind über den Querschnitt des Filtergehäuses verteilt und in einer oder mehreren Ebenen übereinander angeordnet. Die Sammelkanäle sind innerhalb oder außerhalb des Filtergehäuses mit Reingasleitungen verbunden. Bei diesen bekannten Filtern ist keine Möglichkeit vorgesehen, den Zustand der Filterelemente zu überwachen, um z.B. einen Bruch oder ein Verstopfen eines Filterelementes oder mehrerer einem Sammelkanal zugeordneter Filterelemente feststellen zu können.

In der WO 87/07179 ist eine Filteranordnung beschrieben, bei der die Filterelemente in einer Platte aufgehängt, die den Innenraum des Filters an einen Rohgasraum und einen Reingasraum aufteilt. Dabei ist jedem einzelnen Filterelement eine Abreinigungslanze zugeordnet, in der jeweils eine Meßstelle zur Bestimmung des Staudruckes angeordnet ist. Auf diese Weise kann jedes einzelne Filterelement individuell überwacht und mit Hilfe der Abreinigungslanze separat gereinigt werden. Eine solche Filteranordnung ist für große Filter mit einer Vielzahl von Filterelementen zu aufwendig.

Aus der WO 88/07404 und der EP-A-0 314 253 sind Heißgasfilter bekannt, bei denen die Filterelemente ebenfalls an einer Platte aufgehängt sind. Bei diesen Filtern wird die integrale Druckdifferenz zwischen dem Rohgas- und dem Reingasraum über alle Filterelemente während des Filterprozesses gemessen und dieses Meßsignal zur Steuerung des Abreinigungszyklusses verwendet. Diese Anordnung läßt nur eine Aussage über den Zustand der Filterelemente insgesamt zu.

Der Erfindung liegt daher die Aufgabe zugrunde, eine Vorrichtung zu schaffen, um eine Gruppe von Filterelementen zu überwachen, die in einem eine Vielzahl von Filterelementen enthaltendem Filter angeordnet sind.

Diese Aufgabe wird bei einer gattungsgemäßen Vorrichtung erfindungsgemäß durch die kennzeichnenden Merkmale des Patentanspruches 1 gelöst. Vorteilhafte Ausgestaltungen der Erfindung sind Gegenstand der Unteransprüche.

Die Erfindung geht von dem Grundgedanken aus, daß eine Änderung des das Filterelement durchströmenden Reingasstromes sich in einer Änderung des Staudruckes des Reingases in der betroffenen Leitung äußert. So wird der Staudruck ansteigen, wenn ein Filterelement defekt oder undicht ist, und abnehmen, wenn das Filterelement verstopft ist. Beide Möglichkeiten lassen sich über eine Messung des Staudruckes feststellen. Aufgrund der Meßergebnisses kann dann z. B. der dem betreffenden Filterelement zugeordnete Sammelkanal abgesperrt werden.

Mehrere Ausführungsbeispiele der Erfindung sind in der Zeichnung dargestellt und werden im folgenden näher erläutert. Es zeigen:
Fig. 1 schematisch einen Längsschnitt durch eine Vorrichtung zum Filtern von Gasen und
Fig. 2 einen Längsschnitt durch eine andere Vorrichtung zum Filtern von Gasen.

Die Vorrichtungen zum Filtern von vorzugsweise heißen, staubbeladenen, unter Druck stehenden Gasen bestehen aus einem Filtergehäuse 1 mit einem zylindrischen Mantel 2, einem gewölbten Deckel 3 und mit einem Trichter 4 im unteren Teil. Der Trichter 4 geht in einen Auslaßstutzen 5 über und dient zum Sammeln des abgeschiedenen Staubes. Das Filtergehäuse 1 ist mit einem Zuführungsstutzen 6 für das zu reinigende Rohgas versehen.

Innerhalb des Filtergehäuses 1 sind hohle Filterelemente angeordnet, die derart mit das Reingas führenden Sammelkanälen 8 verbunden sind, daß die Innenräume der Filterelemente mit dem Innenraum eines Sammelkanales 8 in Verbindung stehen. Als Filterelemente kommen Filterschläuche oder keramische als einseitig geschlossene Hohlkörper ausgebildete Filterkerzen 7 zur Anwendung. Jeder Sammelkanal 8 nimmt eine Gruppe von Filterkerzen 7 auf, die über entsprechend geformte Mundstücke auf dem Sammelkanal 8 aufstehen, oder unterhalb des Sammelkanals 8 aufgehängt sind. Die Sammelkanäle 8 sind in einer oder mehreren Ebenen übereinander und nebeneinander angeordnet. Die Sammelkanäle 8 können z. B. auf einem an dem Mantel 2 des Filtergehäuses 1 abgestützten Tragring aufliegen oder oberhalb der Filterkerzen 7 in dem Filtergehäuse 1 aufgehängt sein.

Jeder Sammelkanal 8 ist mit einer Zuführungsleitung 9 verbunden, die einzeln durch das Filtergehäuse 1 nach außen geführt und dort an Sammler 10 angeschlossen sind. Die Sammler 10 sind mit einer Reingasleitung 11 zur Abführung des Reingases verbunden. In jeder Zuführungsleitung 9 ist in dem außen liegenden Teil ein mit einem Antrieb 12 versehenes Absperrorgan 13 angeordnet.

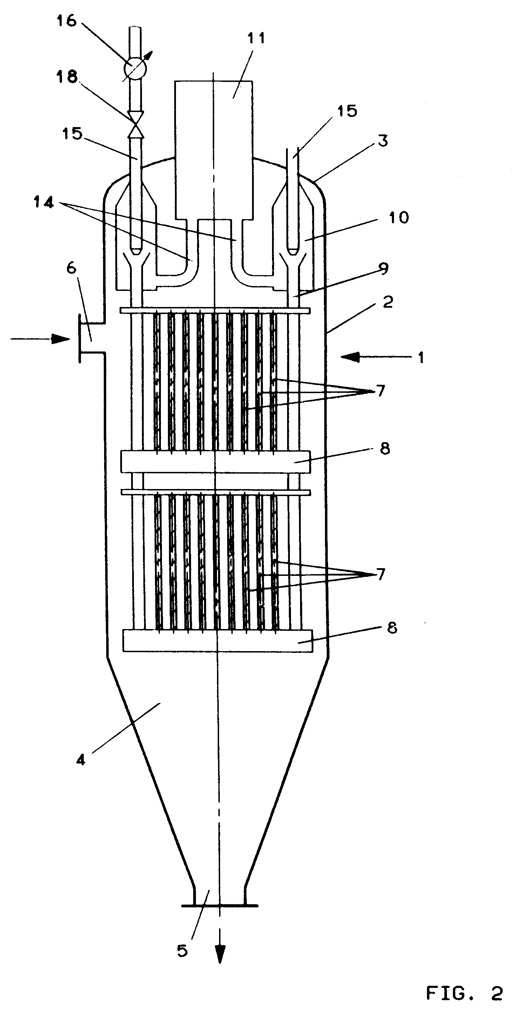

Bei der in Fig. 2 dargestellten Vorrichtung zum Filtern von heißen, staubbeladenen Gasen sind die Sammler 10, in die Zuführungsleitungen 9 einmünden, innerhalb der Filtergehäuses angeordnet. Die Sammler 10 sind über Verbindungsleitungen 14 mit der Reingasleitung 11 verbunden, die bei dieser Vorrichtung durch das Filtergehäuse 1 nach außen geführt ist.

Koaxial zu jeder Zuführungsleitung 9 ist eine Abreinigungslanze 15 angeordnet. Die Abreinigungslanze 15 ist in den Sammler 10 hineingeführt und endet in einem vertikalen Abstand von der Einmündung der Zuführungsleitung 9. In der Abreinigungslanze 15 kann ein Absperrorgan 18 angeordnet sein. Durch diese Abreinigungslanze 15 wird ein gasförmiges Abreinigungsmedium in den Sammelkanal 8 mit einem vorgegebenen, den Rohgasdruck übersteigenden Druck eingeführt. Durch Zuführung des Abreinigungsmediums in den Innenraum der Filterkerzen 7 wird der Filterkuchen, der sich auf der Außenseite der Filterkerzen 7 gebildet hat, entfernt.

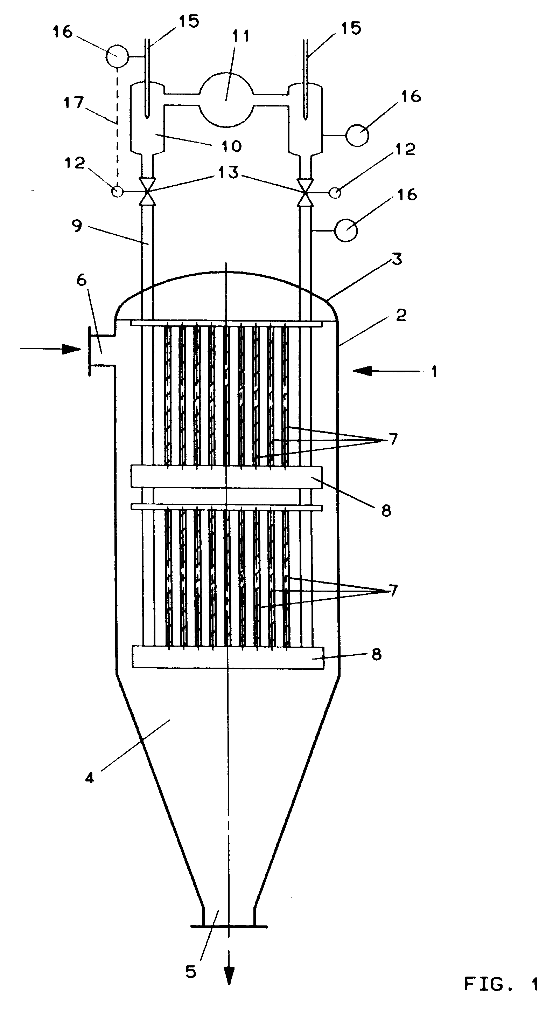

Innerhalb des Reingasstromes ist eine Druckentnahme 16 vorgesehen. Bei einer Vorrichtung mit einzeln nach außen geführten Zuführungsleitungen 9 kann diese Druckentnahne 16 in jeder Zuführungsleitung 9 oder jedem Sammler 10 angeordnet sein, wie das beispielhaft für die in Fig. 1 rechts dargestellte Zuführungsleitung gezeigt ist. Die Druckentnahme 16 kann mit dem Antrieb 12 des Absperrorgans 13 über eine Steuerleitung 17 gekoppelt sein. Vorzugsweise wird die Druckentnahme 16 in der Abreinigungslanze 15 angeordnet. Diese Anordnung kommt vor allem bei innerhalb des Filtergehäuses 1 liegenden Sammlern in Betracht.

Weicht der von einer der Druckentnahmen 16 registrierte Staudruck des Reingases von einem vorgegebenen Wert ab, so ist das ein Anzeichen dafür, daß eine oder mehrere der Filterkerzen 7, die dieser Druckentnahme 16 zugeordnet sind, nicht in Ordnung sind.

Bei einer Abweichnung nach oben wird eine oder mehrere Filterkerzen der betreffende Gruppe undicht oder defekt sein. In diesem Fall besteht die Möglichkeit die Filterkerzengruppe manuell oder über die Steuerleitung 17 selbsttätig durch Schließen des Absperrorgans 13 in der betreffenden Zuführungsleitung 9 von der Beaufschlagung mit Rohgas abzusperren. Bei innen liegenden Sammlern 10 kann das Absperrorgan 18 in der zugeordneten Reiningungslanze 15 geschlossen werden, wodurch sich infolge fehlender Abreinigung die Filterkerzen 7 dieser Gruppe in kurzer Zeit vollständig verstopfen, und kein Reingas mehr durchlassen. Das Schließen des Absperrorgans 18 kann manuell oder gesteuert über die Druckentnahme 16 erfolgen.

## Patentansprüche

1. Vorrichtung zur Überwachung von hohlen, zum Filtern von heißen staubbeladenen Gasen dienenden Filterelementen, die gruppenweise in einem Filtergehäuse (1) angeordnet und über Abführungsleitungen (9) mit Sammlern (10) zur Abführung des Reingases verbunden sind, wobei in die Abführungsleitung (9) jeder Gruppe von Filterelementen eine Abreinigungslanze (15) zum Einblasen eines der Abreinigung der Filterelemente dienenden Reinigungsmediums hineingerichtet ist, dadurch gekennzeichnet, daß in Strömumgsrichtung hinter den Filterelementen in jeder Abführungsleitung (9), in jedem Sammler (10) oder in jeder einer Abführungsleitung (9) zugeordneten Abreinigungslanze (15) eine Meßstelle (16) zur Bestimmung des Staudruckes des Reingases angeordnet ist.

2. Vorrichtung nach Anspruch 1, dadurch gekennzeichnet, daß die Abführungsleitungen (9) einzeln aus dem Filtergehäuse (1) herausgeführt und außerhalb des Filtergehäuses (1) mit den Sammlern (10) verbunden sind und daß in jeder Abführungsleitung (9) außerhalb des Filtergehäuses (1) ein Absperrorgan (13) angeordnet ist, das über die Meßstelle (16) gesteuert ist.

3. Vorrichtung nach Anspruch 1, dadurch gekennzeichnet, daß die Abführungsleitungen (9) innerhalb des Filtergehäuses (1) über die Sammler (10) mit einer Reingasleitung (11) verbunden sind, die aus dem Filtergehäuse (1) herausgeführt ist und daß in jeder Abreinigungslanze (15) ein Absperrorgan (18) angeordnet ist, das über die Meßstelle (16) gesteuert ist.

## Claims

1. Device for the monitoring of hollow filter elements which serve for the filtering of hot dust-laden gases, are arranged in groups in a filter housing (1) and connected by way of discharge ducts (9) with collectors (10) for the discharge of the pure gas, wherein a cleaning-off lance (15) for the blowing-in of a cleaning medium, which serves for the cleaning-off of the filter elements, is directed into the discharge duct (9) of each group of filter elements, characterised thereby, that a measurement point (16) for ascertaining the pressure head of the pure gas is arranged in each collector (10) or in each cleaning-off lance associated with a discharge duct (9) in flow direction behind the filter elements in each discharge duct (9).

2. Device according to claim 1, characterised thereby, that the discharge ducts (9) are led out of the filter housing (1) individually and connected with the collectors (10) externally of the filter housing (1) and that a shut-off organ (13), by way of which the measuring point (16) is controlled, is arranged in each discharge duct (9) externally of the filter housing (1).

3. Device according to claim 1, characterised thereby, that the discharge ducts (9) are connected internally of the filter housing (1) by way of the collectors (10) with a pure gas duct (11), which is led out of the filter housing (1) and that a shut-off organ (18), by way of which the measuring point (16) is controlled, is arranged in each cleaning-off lance (15).

## Revendications

1. Dispositif de surveillance d'éléments creux, servant à la filtration de gaz chauds chargés de poussières, disposés par groupes dans un carter (1) et reliés, par l'intermédiaire de conduites d'évacuation (9), à des collecteurs (10), afin d'assurer l'évacuation des gaz épurés, une lance de nettoyage (15), destinée à insuffler un milieu de nettoyage pour nettoyer les éléments filtrants étant dirigée dans la conduite d'évacuation (9) de chaque groupe d'éléments filtrants, caractérisé en ce qu'une prise de mesure (16), destinée à déterminer la pression dynamique des gaz épurés, en aval des éléments filtrants dans la direction de l'écoulement, est prévue, cette prise de mesure étant disposée dans chaque conduite d' évacuation (9), dans chaque collecteur (10) ou dans chaque lance de nettoyage (15) associée à une conduite d'évacuation (9).

2. Dispositif selon la revendication 1, caractérisé en ce que les conduites d'évacuation (9) sont sorties individuellement du carter de filtre (1) et sont reliées aux collecteurs (10), à l'extérieur du carter de filtre (1), et en ce qu'un organe d'isolation (13), commandé par l'intermédiaire de la prise de mesure (16), est disposé à l'extérieur du carter de filtre (1) dans chaque conduite d'évacuation (9).

3. Dispositif selon la revendication 1, caractérisé en ce que les conduites d'évacuation (9) sont reliées à l'intérieur du carter de filtre (1), par l'intermédiaire des collecteurs (10), à une conduite de gaz épurés (11) qui est sortie du carter de filtre (1), et en ce qu'un organe d'isolement (18), commandé par l'intermédiaire de la prise de mesure (16), est disposé dans chaque lance de nettoyage (15).
